Europäisches Patentamt

European Patent Office

Office européen des brevets

(11) Publication number: **0 351 772**
**A2**

# (12) EUROPEAN PATENT APPLICATION

(21) Application number: **89113144.3**

(22) Date of filing: **18.07.89**

(51) Int. Cl.4: **C01B 15/037**

(30) Priority: **19.07.88 US 221063**

(43) Date of publication of application:
**24.01.90 Bulletin 90/04**

(84) Designated Contracting States:
**AT BE CH DE ES FR GB GR IT LI NL SE**

(71) Applicant: **HENKEL CORPORATION (a Delaware corp.)**
**300 Brookside Avenue**
**Ambler, PA 19002(US)**

(72) Inventor: **McMillen, Mark W.**
**4120 Albert Road**
**Oxford Michigan 48051(US)**

(74) Representative: **von Kreisler, Alek et al**
**Patentanwälte Von Kreisler-Selting-Werner-Schönwald-Fues-Dallmeyer Deichmannhaus**
**D-5000 Köln 1(DE)**

(54) **Stabilized hydrogen peroxide.**

(57) The invention is a stabilized hydrogen peroxide wherein the stabilizer is an anionic, cationic, nononic or amphoteric surfactant.

EP 0 351 772 A2

## STABILIZED HYDROGEN PEROXIDE

Background of the Invention

The decomposition of hydrogen peroxide must be controlled at all times because the resultant generation of gas and heat can present safety problems. Although pure hydrogen peroxide, stored in clean passive containers, is relatively stable, commercial solutions generally contain catalytic impurities and must be stabilized. The stabilizers generally used deactivate the catalytic through complex formation or adsorption. U.S. Patent 4,059,678 discloses the systems used to stabilize hydrogen peroxide.

The concentration of stabilizer required decreases with increasing hydrogen peroxide concentration. A dilution grade hydrogen peroxide (about 70% $H_2O_2$) contains enough stabilizer to permit dilution to a 35% or 50% concentration. Some stabilizers are degraded by concentrated hydrogen peroxide and can only be used in dilute solutions.

Stabilization is particularly critical for hydrogen peroxide solutions which can become contaminated with metal ions which have catalytic activity for hydrogen peroxide decomposition. Among metals which can catalyze, the decomposition of hydrogen peroxide are multivalent metals such as iron, zinc, copper, alumimum and the like. When the aqueous hydrogen peroxide solution is to be used in an application where catalytic metal contamination can occur, a stabilizer is necessary to obtain the benefit of the hydrogen peroxide in the intended use.

Applicants have discovered new organic stabilizers for hydrogen peroxide which are useful in many applications where contamination by metallic catalysts can be a problem.

Brief Description of the Invention

According to the present invention, a stable aqueous solution of hydrogen peroxide comprises an aqueous hydrogen peroxide and a stabilizing amount of at least one aqueous hydrogen peroxide soluble compound selected from the group consisting of nonionic, catonic, anionic and amphoteric surfactants, phenylacetic acids and their salts, salicylic acid and its salts, sulfosalicylic acid and its salts, diethylene triamine pentacetic acid and its salts, and methyl-3,4,5-trihydroxy benzoate.

Detailed Description of the Invention

The concentration of the new stabilizers of the present invention varies depending on the particular stabilizer selected, its efficacy and the concentration of the hydrogen peroxide. More concentrated solutions of hydrogen peroxide generally require lower quantitites of the stabilizer. Generally, a ratio of stabilizer to hydrogen peroxide of from about 1:10,000 to 1;1 can be used.

The amount of stabilizer used is preferably from 0.05% to about 10% of the hydrogen peroxide in the solution and most preferably from about 0.1% to 5% of the hydrogen peroxide in the solution. Generally, more concentrated solutions require lower concentrations of stabilizer in relation to the amount of hydrogen peroxide in the solution.

At high concentration of hydrogen peroxide, some of the stabilizers of the present invention cannot be used since they react with the hydrogen peroxide. These stabilizers must be used in more dilute hydrogen peroxide solutions.

To be useful, the stabilizer of the present invention must be soluble in the hydrogen peroxide or interact with the hydrogen peroxide to the extent at least that a stabilizing amount can be present in the composition.

The stabilizers of the present invention are useful for stabilizing hydrogen peroxide against decomposition in the presence of catalytic amounts of multivalent metal ions. The stabilizers can be used in both acidic and alkaline compositions. The stabilizers of the invention are particularly useful for stabilizing hydrogen peroxide solutions against the catalytic activity of copper ions in a pH range below about 7.

The stabilizers of the present invention are effective at ambient temperatures and at elevated temperatures in the range in which hydrogen peroxide is generally prepared and utilized.

The stabilizers of the present invention are particularly useful in applications where the surfactant activity of the stabilizers can be utilized. Such applications include metal treating where metal pieces or strips are sprayed with or dipped in compositions containing hydrogen peroxide. In these applications, the surfactant activity of the stabilizers can aid in draining of the treating composition from the metal and more rapid rinsing of the substrate.

The compositions of the invention can be prepared by adding the stabilizers of the invention to aqueous hydrogen peroxide solutions at their use concentrations. The stabilizers of the present invention can be used to make a concentrated solution of hydrogen peroxide and stabilizer and the concentrated solution diluted to the use concentration. Another method for making a stabilized solution is to prepare a solution of hydrogen peroxide at its intended use concentration and adding an excess of stabilizer. The solution with the excess of stabilizer can then be added to other hydrogen peroxide solutions to stabilize them.

The stabilizers of the invention can be used alone or in combination with other stabilizers for hydrogen peroxide.

The stabilizers useful in the composition of the present invention include anionic surfactants such as the carboxylates (RCOOM) where R is a hydrocarbon chain of $C_9$-$C_{21}$ and M is an alkali metal including ammonium which includes soaps; the polyalkoxy carboxylates $(R-(OCH_2CHR^1-)OR''COOM)$ where R is as defined above, $R^1$ is hydrogen or lower alkyl and $R''$ is lower alkyl and M is as defined above; the N-Acylsarcosinates $(RCON(CH_3)CH_2COOM)$ wherein R and M are as defined above; acylated protein hydrolysates prepared by acylation of protein hydrolysates with fatty acids or fatty acid chlorides; alkyl, aryl or alkylaryl sulfonates and their alkali metal salts such as alkyl benzene sulfonates $(R_2C_6H_4SO_3M)$ where $R_2$ is an aliphatic group of from about 7 to about 15 carbon atoms, alkyl arenesulfonates and their alkali metal and ammonium salts which include the salts of the sulfonates of toluene, xylene and isopropyl benzene; naphthalene sulfonates which include salts of naphthalene sulfonate, tetrahydronaphthalene sulfonate, alkyl naphthalene sulfonate and formaldehydenaphthalene condensation product sulfonate; -olefin sulfonate salts; petroleum sulfonate salts; sulfonates with ester, amide or ether linkages such as dialkyl sulfosuccinates $(R_3O_2CCH_2CH(SO_3Na)CO_2R_3)$, amidosulfonates (N-acyl-N-Alkyl taurates, $RCONR_4CH_2CH_2SO_3M$) wherein R is as defined above and $R_4$ is lower alkyl; the sulfoethyl esters of fatty acids $(RCO_2CH_2CH_2SO_3M)$ wherein R and M are as defined above, alcohol sulfates $(ROSO_3M)$ wherein R and M are as defined above; ethoxylated and sulfated alcohols $(R-(OCH_2CH_2)_nOSO_3M)$ wherein R and M are as defined above; ethoxylated and sulfated alkyl phenols $(RC_6H_4(OCH_2CH_2)_nOSO_3M)$ wherein R and M are as defined above; sulfated natural oils and fats; mono and diesters of phosphoric acid $(R_5O)_n(OH)_{3-n}PO)$ where n is 1 or 2 and $R_5$ is an alkyl of from about 1 to 22 carbon atoms, phenyl, alkyl phenyl, ethoxylated alkyl, ethoxylated phenyl, ethoxylated alkyl phenyl, glyceride ester and the like.

The nonionic surfactants include ethoxylates such as alcohol ethoxylates $(R_6(OCH_2CH_2)_{n2}-OH$, wherein $R_6$ is a group having from about 1 to 22 carbons; alkyl phenol ethoxylates $(R_7C_6H_4(OCH_2CH_2)_{n2}OH$ wherein $n_2$ is from about 1 to 70; glycerol esters of fatty acids; polyoxyethylene esters of rosin, tall oil and fatty acids, ethoxylated anhydrosorbitol esters; ethoxylated natural fats, oils and waxes; carboxylic amides; diethanolamine condensates; monoethanol amine condensates; polyoxyethylene fatty acid amides; polyalkylene oxide polymer and block copolymers.

The cationic surfactants include oxygen free mono and dialkyl amines; oxygen containing amines such as alkyl amine ethoxylates and alkyl amine oxides; rosin and aliphatic amine ethoxylates; 2-alkyl-1-(2-hydroxyethyl)-2-imidazolines; amines with amide linkages, and quatenary ammonium salts.

The amphoteric surfactants include both an acidic and basic hydrophillic group and include imidazolinum derivatives; alkyl betaines; amidopropylbetaines; sulfobetaines; sulfotaines, and the like.

Other useful stabilizers include phenyl acetic acid and its salts, salicylic acid and its salts, diethylene triamine Pentaacetic acid and its salts, and methyl-3,4,5-trihydroxy bezoate, sulfosalicylic acid and its salts and polymeric phenyl sulfonate.

The above lists of typical compositions useful in the present invention is for illustrative purposes only and is not to be considered as limiting the scope of the compositions useful as stabilizers in the composition of the invention. Typical surfactant structures can be found in Encyclopedia of Chemical Technology, Kirk-Othmer, Vol. 22, Third Edition, John Wiley and Sons, Pgs. 347-386, 1983 which are incorporated herein by reference.

The following examples illustrate the stability of the hydrogen peroxide compositions of the invention.

Preferred surfactants include Minataine CBS, nonylphenolethoxylate, Mona AT 1200 (alkyl betaine) and chemfac PC-006.

Other than in the operating examples, or where otherwise indicated, all numbers expressing quantitites of ingredients or reaction conditions used herein are to be understood as modified in all instances by the term "about".

3

## EXAMPLE 1

An unstabilized hydrogen peroxide (Fisher Certified A.C.S. 30%) was used to prepare a concentrate by mixing 190 milliliters of peroxide with 10 milliliters of the stabilizer or 198 milliliters of peroxide with 2 milliliters of the stabilizer to form a 5% and a 1% concentrate. If the stabilizer was a solid 10 grams or 2 grams were added (the actual amount of stabilizer varied since some stabilizers were solutions of the active material).

Test solutions were prepared by mixing 32 milliliters of concentrate and 10 milliliters of 70% nitric acid and diluting to 400 milliliters with deionized water. The test solution was titrated for hydrogen peroxide content. Two hundred milliliters of each test solution, as a control, was placed in a plastic container and the top of the container was placed on the container but not tightened. To a second 200 milliliters of each test solution was added 5 milliliters of a 20 gram per liter copper solution (copper nitrate) to provide 500ppm copper in the test solution. The test solutions containing copper were placed in plastic containers. The tops were placed on the containers but not tightened. The test samples and controls were titrated for hydrogen peroxide content after 2 weeks.

The percent decomposition was determined as follows: A corrected initial titration was determined to correct for dilution and decomposition which occurred without the presence of copper. The corrected initial titration was determined from the control sample containing stabilizer but no copper ions.

Corrected initial titration = final titration (control) x .975 (dilution factor).

$$\% \text{ decomposition} = \frac{\text{Corrected init. titration} - \text{Final titration (copper)}}{\text{Corrected initial titration}}$$

TABLE 1

| Stabilizer | % Stabilizer in Concentrate | % Active Stabilizer in Concentrate | % Decomposition after Two Weeks |
|---|---|---|---|
| None | | | 48% |
| Sodium dodecyl diphenyl oxide disulfonate | 1% | .45% | 1% |
| Dodecyl diphenyl oxide disulfonic acid | 1% | .45% | 3% |
| Dodecyl diphenyl oxide disulfonic acid | 5% | 2.25% | 2% |
| Sodium 2-ethyl hexyl sulfate | 1% | .4% | 5% |
| Sodium 2-ethyl hexyl sulfate | 5% | 2% | 1% |
| Sodium alkyl polyethoxy sulfonate (AVANEL BSA -74) | 1% | .4% | 5% |
| Sodium alkyl polyethoxy sulfonate (AVANEL BSA -74) | 5% | 2% | 2% |
| Sodium xylene sulfonate | 1% | .4% | 4% |
| Sodium xylene sulfonate | 5% | 2% | 3% |
| Alkyl phosphate ester (MONAFAX 1214) | 1% | 1% | 1% |
| Alkyl phosphate ester (MONAFAX 1214) | 5% | 5% | 1% |

The test results show that the stabilizers provide substantial inhibition of metal catalyzed decomposition.

EXAMPLES 2 and 3

Concentrates were prepared from a commercial grade of 35% hydrogen peroxide containing a proprietary stabilizer as in Example 1. The hydrogen peroxide content was determined when prepared and after four weeks storage at room temperature in covered but not sealed containers. The percent of hydrogen peroxide lost by decomposition was determined as in Example 1 and is shown in Table 2 and 3.

## TABLE 2

| Stabilizer | % Stabilizer in Concentrate (% Active Mat.) | % Decomposition after 4 Weeks |
|---|---|---|
| None | -- | 49% |
| Ethoxylated Octyl Phenol (Triton X-102) | 5% v/v | 0% |
| Ethoxylated Octyl Phenol (Triton X-100) | 5% v/v | 1% |
| Ethoxylated Nonyl Phenol (Triton N-100) | 5% v/v | 2% |
| Polyethoxy Phenol Phosphate Ester (Chemfac PC-006) | 5% v/v | 0% |
| Polyethoxy Alkyl Phenol Phosphate Ester (Chemfac PC-099) | 5% v/v | 3% |
| Aromatic Phosphate Ester (Monafax 057) | 5% v/v | 0% |
| Alkyl Phosphate Ester (Monafax 060) | 5% v/v | 0% |
| Polyethoxy Phenyl Ester Phosphate Ester (GAFAC RP-710) | 5% v/v | 0% |
| Catonic Surfactant . (Monaquat P-TC) | 5% v/v | 5% |
| Alkyl Ether Hydroxypropyl Sultaine (Mirawet ASC) | 1% v/v (0.5%) | 8% |
| Cocamidopropyl Hydroxy Sultaine (Mirataine CBS) | 5% v/v (2.5%) | 3% |
| Ethylene Oxide/Propylene Oxide Block Copolymer (Pluronic R 127) | 5% | 3% |
| Caprylamphoproprionate (Monateric 1000) | 1% v/v | 4% |

| Stabilizer | % Stabilizer in Concentrate (% Active Mat.) | % Decomposition after 4 Weeks |
|---|---|---|
| Dodecylbenzene Sulfonic Acid | 5% v/v | 2% |
| Sodium 1-Octane Sulfonate | 5% w/v | 1% |
| Sodium Tetradecyl Sulfate (Niaproof 4) | 5% v/v | 1% |
| Alkyl Aryl Sulfonate (Triton X-200) | 1% v/v | 3% |

## TABLE 3

| Stabilizer | % Stabilizer in Concentrate (% Active Mat.) | % Decomposition after 4 Weeks |
|---|---|---|
| None | -- | 57% |
| Sodium Dodecyl Sulfate | 5% w/v | 0% |
| Sulfosalicylic Acid | 5% w/v | 2% |
| Alkyl Betaine (Mona AT-1200) | 5% v/v | 2% |
| Polymeric Phenyl Sulfonate (Hamplex DPS N,N-bis(2-hydroxy-5-sulfonic acid benzyl) glycine sodium salt) | 5% v/v | 4% |
| Hydroxyphenylacetic Acid (1/2 neutralized with NaOH) | 5% w/v | 6% |
| Para Toluene Sulfonic Acid | 5% w/v | 5% |
| Salicylic Acid (1/2 neutralized with NaOH) | 5% w/v | 4% |
| Lauroyl Sarcosine (Hamposyl L) | 1% v/v | 12% |

The compositions of the present invention are stable and in some cases no noticeable decomposition occurred. The surfactant utilized depends not only on the amount of decomposition but in the usefulness of the other properties of the surfactant.

## Claims

Claim 1. A stabilized hydrogen peroxide composition which comprises aqueous hydrogen peroxide and a stabilizing amount of at least one compound selected from the group consisting of nonionic, anionic, cationic and amphoteric surfactants, phenylacetic acid and its salts, salicylic acid and its salts, diethylene triamine pentacetic acid and its salts, sulfosalycilic acid, its salts and polymeric phenyl sulfonates and their salts and methyl-3,4,5- trihydroxy bezoate.

Claim 2. A composition of Claim 1 wherein the ratio of surfactant to hydrogen peroxide is from about 1:10,000 to about 1:1.

Claim 3. a composition of Claim 1 wherein the concentration of stabilizer is from about 0.01% to about 10% by weight of hydrogen peroxide.

Claim 4. A composition of Claim 1 wherein the stabilizer comprises at least one surfactant selected from the group consisting of sodium dodecyl diphenyl oxide disulfonate, dodecyl diphenyloxide disulfonic acid, sodium 2-ethylhexyl sulfate, sodium alkyl polyethoxy sulfonate, sodium xylene sulfonate, alkyl phosphate ester, ethoxylated octyl phenol, ethoxylated nonylphenol, aromatic phosphate ester (Chemfac PC 006), Aromatic phosphate ester (Monofax 057), alkyl phosphate ester (Monofax 060), polyethoxyphenyl ether phosphate ester, cationic surfactant (Monoquat P-JC), alkyl ether hydroxypropyl sultaine, cocamidopropyl hydroxy sultaine, sodium dodecy sulfate, sulfosalicylic acid, amphoteric surfactant (Mona AT 1200) and polymeric phenyl sulfonate (Hamplex DPS).

Claim 5. A composition of Claim 4 wherein the stabilizer comprises at least one member selected from the group consisting of sodium dodecyl sulfate, Mona AT 1200, sulfosalicylic acid, cocamidopropyl hydroxy sultaine, aromatic phosphate ester (Monofax 057), polyethoxy phenyl ether phosphate ester, aromatic phosphate ester (Chemfac PC 006), ethoxylated nonyl phenol, ethoxylated octyl phenol and sodium dodecyl diphenyl oxide disulfonate.

Claim 6. A method for stabilizng a solution of hydrogen peroxide which comprises mixing with the hydrogen peroxide a stabilizing amount of at least one member selected from the group consisting of nonionic, cationic, anionic and amphoteric surfactants, phenylacetic acid and its salt, salicylic acid and its salt, diethylene triamine pentaacetic acid and its salts, sulfoscilicylic acid and its salts and methyl-3,4,5-trihydroxy bezoate and polymeric phenyl sulfonate (Hamplex DPS).

Claim 7. A method of Claim 6 wherein the ratio of surfactant to hydrogen peroxide is from about 1:10,000 to 1:1.

Claim 8. A composition of Claim 1 further comprising multivalent metal ions.

Claim 9. A composition of Claim 1 wherein the multivalent metal ions comprise at least ions of one metal selected from the group consisting of copper, iron, aluminum and zinc.